# EUROPEAN PATENT APPLICATION

(11) **EP 4 815 243 A1**
(43) Date of publication of application: **30.09.2026**
(21) Application number: 26165782.9
(22) Date of filing: 18.03.2026
(51) Int. Cl.: H02J 3/32, H02J 7/62

(54) **ENERGY STORAGE SYSTEM**

(30) Priority: 25.03.2025 CN 202510362215
(71) Applicant: HUAWEI TECHNOLOGIES CO., LTD., Shenzhen 518129 (CN)
(72) Inventor: CHEN, Baoguo, 518129 Shenzhen (CN); LIAO, Guohong, 518129 Shenzhen (CN); LIU, Xiaoyu, 518129 Shenzhen (CN)
(74) Representative: Isarpatent

(57) **Abstract**

This application provides an energy storage system. The energy storage system includes a plurality of energy storage units, and each energy storage unit includes a first battery cluster, a second battery cluster, a first switch, a second switch, a direct current bus, and a power conversion system. The first switch is configured to establish or disconnect circuit connection between the direct current bus and a plurality of battery cells in the first battery cluster; and the second switch is configured to establish or disconnect circuit connection between the direct current bus and a plurality of battery cells in the second battery cluster. A direct current end of the power conversion system is connected to the direct current bus. When the power conversion system is electrically connected to a power grid, an absolute value of a difference between voltages of the first battery cluster and the second battery cluster is greater than a first voltage threshold, the first switch is open, and the second switch is closed, the power conversion system controls electric energy to be transferred between the second battery cluster and the power grid. When the absolute value of the difference between the voltages of the first battery cluster and the second battery cluster is less than or equal to the first voltage threshold, the first switch is closed. In this way, an inrush current generated in a process of connecting a plurality of battery clusters in parallel to a direct current bus can be reduced.

## Description

### TECHNICAL FIELD

This application relates to the technical field of power supplies, and in particular, to an energy storage system.

### BACKGROUND

With large-scale application of energy storage systems, requirements on energy storage capacities of energy storage systems are becoming higher. Currently, an energy storage capacity of an energy storage system is increased mainly by increasing a quantity of battery clusters connected in parallel to a direct current bus. However, an inrush current exists in a process of connecting a plurality of battery clusters in parallel to the direct current bus, easily damaging the battery clusters. Therefore, how to reduce an inrush current generated in a process of connecting a plurality of battery clusters in parallel is particularly important.

### SUMMARY

This application provides an energy storage system, to effectively reduce an inrush current generated in a process of connecting a plurality of battery clusters in parallel to a direct current bus.

According to a first aspect, this application provides an energy storage system. The energy storage system includes a plurality of energy storage units. Each of the plurality of energy storage units includes a first battery cluster, a second battery cluster, a first switch, a second switch, a direct current bus, and a power conversion system. The first switch is closed or open, to establish or disconnect circuit connection between the direct current bus and a plurality of battery cells in the first battery cluster. The second switch is closed or open, to establish or disconnect circuit connection between the direct current bus and a plurality of battery cells in the second battery cluster. A direct current end of the power conversion system is connected to the direct current bus. Alternating current ends of the power conversion systems of the plurality of energy storage units are connected in parallel and then connected to a power grid. The power conversion system is configured to: when the power conversion system is electrically connected to the power grid, an absolute value of a difference between a voltage of the first battery cluster and a voltage of the second battery cluster is greater than a first voltage threshold, the first switch is open, and the second switch is closed, transfer electric energy of the second battery cluster to the power grid, or transfer electric energy of the power grid to the second battery cluster, so that the absolute value of the difference between the voltage of the first battery cluster and the voltage of the second battery cluster is less than or equal to the first voltage threshold. The first switch is further configured to be closed when the absolute value of the difference between the voltage of the first battery cluster and the voltage of the second battery cluster is less than or equal to the first voltage threshold.

In this implementation, in each energy storage unit, before both the first battery cluster and the second battery cluster are connected in parallel to the direct current bus, the voltages of the first battery cluster and the second battery cluster are detected first. In addition, when the power conversion system in each energy storage unit is electrically connected to the power grid (that is, the energy storage system is in a grid-connected state), and the absolute value of the difference between the voltage of the first battery cluster and the voltage of the second battery cluster in each energy storage unit (hereinafter referred to as the absolute value of the difference between the voltages of the first battery cluster and the second battery cluster) is greater than the first voltage threshold, each energy storage unit first connects its own second battery cluster in parallel to the direct current bus, and then uses its own power conversion system to transfer the electric energy of the second battery cluster to the power grid, or transfer the electric energy of the power grid to the second battery cluster, so that the absolute value of the difference between the voltages of the first battery cluster and the second battery cluster in each energy storage unit is less than or equal to the first voltage threshold. Each energy storage unit connects the first battery cluster in parallel to the direct current bus only when the absolute value of the difference between the voltages of the first battery cluster and the second battery cluster in the energy storage unit is less than or equal to the first voltage threshold. In simple terms, in each energy storage unit, both the first battery cluster and the second battery cluster are connected in parallel to the direct current bus only when the absolute value of the difference between their voltages is less than or equal to the first voltage threshold. An inrush current generated in a process of connecting the first battery cluster and the second battery cluster in parallel to the direct current bus is caused by the difference between the voltages of the first battery cluster and the second battery cluster, and a magnitude of the inrush current is positively correlated with the absolute value of the difference between the voltages. Therefore, the inrush current generated in the process of connecting the first battery cluster and the second battery cluster in each energy storage unit in parallel to the direct current bus can be effectively reduced.

With reference to the first aspect, in a first possible implementation, the power conversion system is configured to: when the power conversion system is electrically connected to the power grid, a difference obtained by subtracting the voltage of the second battery cluster from the voltage of the first battery cluster is greater than the first voltage threshold, the first switch is open, and the second switch is closed, control the second battery cluster to be in a charging state. Specifically, the electric energy of the power grid is transferred to the second battery cluster, so that the absolute value of the difference between the voltage of the first battery cluster and the voltage of the second battery cluster is less than or equal to the first voltage threshold.

With reference to the first aspect, in a second possible implementation, the power conversion system is configured to: when the power conversion system is electrically connected to the power grid, a difference obtained by subtracting the voltage of the first battery cluster from the voltage of the second battery cluster is greater than the first voltage threshold, the first switch is open, and the second switch is closed, control the second battery cluster to be in a discharging state. Specifically, the electric energy of the second battery cluster is transferred to the power grid, so that the absolute value of the difference between the voltage of the first battery cluster and the voltage of the second battery cluster is less than or equal to the first voltage threshold.

With reference to any one of the first aspect to the second possible implementation of the first aspect, in a third possible implementation, the first battery cluster includes a first voltage sampling unit, and the second battery cluster includes a second voltage sampling unit. The first voltage sampling unit is configured to: when the first switch is closed and the second switch is open, collect a voltage of the direct current bus to obtain a first bus voltage. The second voltage sampling unit is configured to: when the first switch is closed and the second switch is open, collect a voltage of the direct current bus to obtain a second bus voltage; and when the first switch is open and the second switch is closed, collect a voltage of the direct current bus to obtain a third bus voltage. The voltage of the first battery cluster is the first bus voltage. The voltage of the second battery cluster is a sum of the third bus voltage and a difference obtained by subtracting the second bus voltage from the first bus voltage. The difference obtained by subtracting the second bus voltage from the first bus voltage may be understood as a sampling error between the first voltage sampling unit and the second voltage sampling unit.

In this implementation, the following is taken into consideration: There is a sampling error between two voltage sampling circuits even when they have a same circuit structure, and the sampling error affects a result of controlling the difference between the voltages of the first battery cluster and the second battery cluster. Consequently, the following problem is caused: Both the first battery cluster and the second battery cluster are connected in parallel to the direct current bus when it is incorrectly determined that the absolute value of the difference between the voltages of the first battery cluster and the second battery cluster is less than or equal to the first voltage threshold. As a result, the effect of controlling an inrush current is poor. Based on this, the energy storage unit provided in this application may convert, based on the sampling error between the first voltage sampling unit and the second voltage sampling unit, the third bus voltage collected by a second voltage sampling circuit into a bus voltage obtained by using a first voltage sampling circuit as a sampling datum, so that both the voltage of the first battery cluster and the voltage of the second battery cluster are voltages obtained by using a same voltage sampling circuit as a sampling datum. In this way, a sampling error between a voltage of the first battery cluster and a voltage of the second battery cluster that are collected by different voltage sampling circuits can be effectively avoided. Therefore, the following case can be effectively avoided: Due to the sampling error, it is incorrectly determined that the absolute value of the difference between the voltages of the first battery cluster and the second battery cluster is less than or equal to the first voltage threshold. In this way, an inrush current generated in a process of connecting the first battery cluster and the second battery cluster in parallel to the direct current bus is effectively reduced.

With reference to any one of the first aspect to the second possible implementation of the first aspect, in a fourth possible implementation, the first battery cluster includes a third voltage sampling unit, and the second battery cluster includes a second voltage sampling unit. The second voltage sampling unit is configured to: when the first switch is closed and the second switch is open, collect a voltage of the direct current bus to obtain a second bus voltage; and when the first switch is open and the second switch is closed, collect a voltage of the direct current bus to obtain a third bus voltage. The third voltage sampling unit is configured to: when the first switch is closed and the second switch is open, collect a voltage across two ends of the plurality of battery cells in the first battery cluster after these battery cells are connected in series/parallel, to obtain a first voltage. The voltage of the first battery cluster is the first voltage. The voltage of the second battery cluster is a sum of the third bus voltage and a difference obtained by subtracting the second bus voltage from the first voltage.

In this implementation, the following is taken into consideration: There is a sampling error between two voltage sampling circuits even when they have a same circuit structure, and the sampling error affects a result of controlling the difference between the voltages of the first battery cluster and the second battery cluster. Consequently, the following problem is caused: Both the first battery cluster and the second battery cluster are connected in parallel to the direct current bus when it is incorrectly determined that the absolute value of the difference between the voltages of the first battery cluster and the second battery cluster is less than or equal to the first voltage threshold. As a result, the effect of controlling an inrush current is poor. Based on this, the energy storage unit provided in this application may convert, based on a sampling error between every two voltage sampling circuits in a plurality of voltage sampling circuits, a plurality of voltages collected by the plurality of voltage sampling circuits into voltages that are obtained by using a same voltage sampling circuit as a sampling datum. In this way, a sampling error between a voltage of the first battery cluster and a voltage of the second battery cluster that are collected by different voltage sampling circuits can be effectively avoided. Therefore, the following case can be effectively avoided: Due to the sampling error, it is incorrectly determined that the absolute value of the difference between the voltages of the first battery cluster and the second battery cluster is less than or equal to the first voltage threshold. In this way, an inrush current generated in a process of connecting the first battery cluster and the second battery cluster in parallel to the direct current bus is effectively reduced.

With reference to any one of the first aspect to the fourth possible implementation of the first aspect, in a fifth possible implementation, the first switch is configured to be closed when the absolute value of the difference between the voltage of the first battery cluster and the voltage of the second battery cluster is less than or equal to the first voltage threshold, and a current of the second battery cluster is less than or equal to a current threshold. The current threshold may be zero, or may be a value close to zero. In this way, it can be ensured that the first switch is closed only when a trigger condition includes the current of the second battery cluster being approximately zero. Because a polarized voltage of a battery cluster is positively correlated with a current of the battery cluster, a polarized voltage of the second battery cluster can be effectively reduced, to reduce an error between an actual voltage value and a detected voltage value of the second battery cluster caused by the polarized voltage of the second battery cluster, thereby effectively reducing an inrush current generated in a process of connecting the first battery cluster and the second battery cluster in parallel to the direct current bus.

With reference to any one of the first aspect to the fourth possible implementation of the first aspect, in a sixth possible implementation, the power conversion system is further configured to shut down when the absolute value of the difference between the voltage of the first battery cluster and the voltage of the second battery cluster is less than or equal to the first voltage threshold. The first switch is configured to: after the power conversion system has been shut down for first duration, be closed when the absolute value of the difference between the voltage of the first battery cluster and the voltage of the second battery cluster is less than or equal to the first voltage threshold. The first duration is greater than 0. Preferably, the first duration is greater than or equal to duration required for the polarized voltage of the second battery cluster to disappear after charging or discharging ends.

A polarized voltage of a battery cluster does not disappear immediately after charging or discharging of the battery cluster ends. Therefore, both a voltage of the first battery cluster and a voltage of the second battery cluster that are in a closing trigger condition of the first switch in this implementation are voltages of the two battery clusters obtained a period of time after charging or discharging of the second battery cluster ends (that is, after the polarized voltage of the second battery cluster disappears). Therefore, an error between an actual voltage value and a detected voltage value of the second battery cluster that is caused by the polarized voltage of the second battery cluster can be effectively avoided, thereby further effectively reducing an inrush current generated in a process of connecting the first battery cluster and the second battery cluster in parallel to the direct current bus.

With reference to any one of the first aspect to the sixth possible implementation of the first aspect, in a seventh possible implementation, the power conversion system is further configured to: in a process of controlling electric energy to be transferred between the second battery cluster and the power grid, when the absolute value of the difference between the voltage of the first battery cluster and the voltage of the second battery cluster is greater than or equal to a second voltage threshold, control a current value of the second battery cluster to be a first current value; and when the absolute value of the difference between the voltage of the first battery cluster and the voltage of the second battery cluster is greater than the first voltage threshold and less than the second voltage threshold, control the current value of the second battery cluster to be a second current value, where the second current value is less than the first current value.

In this implementation, in a process of controlling electric energy to be transferred between the second battery cluster and the power grid, the power conversion system may enable the current of the second battery cluster to be a large current when the absolute value of the difference between the voltages of the first battery cluster and the second battery cluster is relatively large, and enable the current of the second battery cluster to be a small current when the absolute value of the difference between the voltages of the first battery cluster and the second battery cluster is relatively small. In this way, when the absolute value of the difference between the voltages of the first battery cluster and the second battery cluster is relatively large, the absolute value of the difference between the voltages approaches the first voltage threshold at a relatively fast speed. Because a magnitude of a polarized voltage of a battery cluster is positively correlated with a current value of the battery cluster, impact of the polarized voltage of the second battery cluster when the absolute value of the difference between the voltages of the first battery cluster and the second battery cluster is relatively small can also be reduced. This can not only quickly connect the first battery cluster and the second battery cluster in parallel to the direct current bus, but also reduce the impact of the polarized voltage of the second battery cluster on the effect of controlling the difference between the voltages of the first battery cluster and the second battery cluster.

With reference to any one of the first aspect to the seventh possible implementation of the first aspect, in an eighth possible implementation, the energy storage system further includes a first controller. The first controller is configured to: when the power conversion system is electrically connected to the power grid, the absolute value of the difference between the voltage of the first battery cluster and the voltage of the second battery cluster is greater than the first voltage threshold, the first switch is open, and the second switch is closed, control the power conversion system to transfer the electric energy of the second battery cluster to the power grid, or transfer the electric energy of the power grid to the second battery cluster. The first controller is further configured to: when the absolute value of the difference between the voltage of the first battery cluster and the voltage of the second battery cluster is less than or equal to the first voltage threshold, control the first switch to be closed. The first controller may be any one of a cluster controller of the first battery cluster, a container controller of an energy storage container including all battery clusters in the plurality of energy storage units, and a system controller of the energy storage system.

With reference to any one of the first aspect to the eighth possible implementation of the first aspect, in a ninth possible implementation, the first battery cluster and the second battery cluster each include a cluster control box, the first switch is disposed in the cluster control box of the first battery cluster, and the second switch is disposed in the cluster control box of the second battery cluster.

In this implementation, the first switch is disposed in the cluster control box of the first battery cluster, and the second switch is disposed in the cluster control box of the second battery cluster, so that existing internal space of the cluster control box can be effectively used, which avoids additionally increasing a volume of the battery cluster, thereby facilitating a miniaturization design of the battery cluster.

With reference to any one of the first aspect to the ninth possible implementation of the first aspect, in a tenth possible implementation, the plurality of energy storage units include a first energy storage unit and a second energy storage unit. The power conversion system in the first energy storage unit is further configured to: when the power conversion system in each energy storage unit is electrically disconnected from the power grid (that is, the energy storage system is in an off-grid state), the difference obtained by subtracting the voltage of the first battery cluster in the first energy storage unit from the voltage of the second battery cluster in the first energy storage unit is greater than the first voltage threshold, the first switch in the first energy storage unit is open, and the second switch in the first energy storage unit is closed, transfer the electric energy of the second battery cluster in the first energy storage unit to the alternating current end of the power conversion system in the first energy storage unit. The power conversion system in the second energy storage unit is further configured to: when the power conversion system in each energy storage unit is electrically disconnected from the power grid, the difference obtained by subtracting the voltage of the first battery cluster in the first energy storage unit from the voltage of the second battery cluster in the first energy storage unit is greater than the first voltage threshold, one switch in the second energy storage unit is open, and the other switch is closed, transfer electric energy at the alternating current end of the power conversion system in the second energy storage unit to a battery cluster that is connected to the other switch and that is in the second energy storage unit.

In this implementation, in the first energy storage unit, before both the first battery cluster and the second battery cluster are connected in parallel to the direct current bus, the voltages of the first battery cluster and the second battery cluster are detected first. In addition, when the energy storage system is in the off-grid state, and the difference obtained by subtracting the voltage of the first battery cluster in the first energy storage unit from the voltage of the second battery cluster in the first energy storage unit is greater than the first voltage threshold, the first energy storage unit first connects the second battery cluster in parallel to the direct current bus, and the second energy storage unit connects, in parallel to the direct current bus, the battery cluster connected to the other switch. Then, the power conversion system of the first energy storage unit and the power conversion system of the second energy storage unit transfer the electric energy of the second battery cluster in the first energy storage unit to the battery cluster connected to the other switch in the second energy storage unit, so that the absolute value of the difference between the voltages of the first battery cluster and the second battery cluster in the first energy storage unit is less than or equal to the first voltage threshold. Subsequently, the first energy storage unit connects the first battery cluster in parallel to the direct current bus only when the absolute value of the difference between the voltages of the first battery cluster and the second battery cluster in the first energy storage unit is less than or equal to the first voltage threshold. The first energy storage unit and the second energy storage unit are any two energy storage units in the energy storage system. Based on this implementation, it may be learned that in each energy storage unit, both the first battery cluster and the second battery cluster are connected in parallel to the direct current bus only when the absolute value of the difference between their voltages is less than or equal to the first voltage threshold. Therefore, the inrush current generated in the process of connecting the first battery cluster and the second battery cluster in each energy storage unit in parallel to the direct current bus can be effectively reduced.

With reference to any one of the first aspect to the tenth possible implementation of the first aspect, in an eleventh possible implementation, the plurality of energy storage units include a first energy storage unit and a second energy storage unit. The power conversion system in the second energy storage unit is further configured to: when the power conversion system in each energy storage unit is electrically disconnected from the power grid, the difference obtained by subtracting the voltage of the second battery cluster in the first energy storage unit from the voltage of the first battery cluster in the first energy storage unit is greater than the first voltage threshold, one switch in the second energy storage unit is open, and the other switch is closed, transfer, to the alternating current end of the power conversion system in the second energy storage unit, electric energy of a battery cluster that is connected to the other switch and that is in the second energy storage unit. The power conversion system in the first energy storage unit is further configured to: when the power conversion system in each energy storage unit is electrically disconnected from the power grid, the difference obtained by subtracting the voltage of the second battery cluster in the first energy storage unit from the voltage of the first battery cluster in the first energy storage unit is greater than the first voltage threshold, the first switch in the first energy storage unit is open, and the second switch in the first energy storage unit is closed, transfer electric energy at the alternating current end of the power conversion system in the first energy storage unit to the second battery cluster in the first energy storage unit.

In this implementation, in the first energy storage unit, before both the first battery cluster and the second battery cluster are connected in parallel to the direct current bus, the voltages of the first battery cluster and the second battery cluster are detected first. In addition, when the energy storage system is in the off-grid state, and the difference obtained by subtracting the voltage of the second battery cluster in the first energy storage unit from the voltage of the first battery cluster in the first energy storage unit is greater than the first voltage threshold, the first energy storage unit first connects the second battery cluster in parallel to the direct current bus, and the second energy storage unit connects, in parallel to the direct current bus, the battery cluster connected to the other switch. Then, the power conversion system of the first energy storage unit and the power conversion system of the second energy storage unit transfer, to the second battery cluster in the first energy storage unit, the electric energy of the battery cluster connected to the other switch in the second energy storage unit, so that the absolute value of the difference between the voltages of the first battery cluster and the second battery cluster in the first energy storage unit is less than or equal to the first voltage threshold. Subsequently, the first energy storage unit connects the first battery cluster in parallel to the direct current bus only when the absolute value of the difference between the voltages of the first battery cluster and the second battery cluster in the first energy storage unit is less than or equal to the first voltage threshold. The first energy storage unit and the second energy storage unit are any two energy storage units in the energy storage system. Based on this implementation, it may be learned that in each energy storage unit, both the first battery cluster and the second battery cluster are connected in parallel to the direct current bus only when the absolute value of the difference between their voltages is less than or equal to the first voltage threshold. Therefore, the inrush current generated in the process of connecting the first battery cluster and the second battery cluster in each energy storage unit in parallel to the direct current bus can be effectively reduced.

With reference to the tenth possible implementation of the first aspect or the eleventh possible implementation of the first aspect, in a twelfth possible implementation, the energy storage system further includes a second controller. The second controller is configured to: when the power conversion system in each energy storage unit is electrically disconnected from the power grid, the difference obtained by subtracting the voltage of the first battery cluster in the first energy storage unit from the voltage of the second battery cluster in the first energy storage unit is greater than the first voltage threshold, the first switch in the first energy storage unit is open, and the second switch in the first energy storage unit is closed, control the power conversion system in the first energy storage unit to transfer the electric energy of the second battery cluster in the first energy storage unit to the alternating current end of the power conversion system in the first energy storage unit. The second controller is further configured to: when the power conversion system in each energy storage unit is electrically disconnected from the power grid, the difference obtained by subtracting the voltage of the first battery cluster in the first energy storage unit from the voltage of the second battery cluster in the first energy storage unit is greater than the first voltage threshold, one switch in the second energy storage unit is open, and the other switch is closed, control the power conversion system in the second energy storage unit to transfer the electric energy at the alternating current end of the power conversion system to a battery cluster that is connected to the other switch and that is in the second energy storage unit. The second controller is further configured to: when the absolute value of the difference between the voltage of the first battery cluster in the first energy storage unit and the voltage of the second battery cluster in the first energy storage unit is less than or equal to the first voltage threshold, control the first switch in the first energy storage unit to be closed. The second controller may be a container controller of an energy storage container including all battery clusters in the plurality of energy storage units, or a system controller of the energy storage system.

### BRIEF DESCRIPTION OF DRAWINGS

FIG. 1 is a diagram of an application scenario of an energy storage system according to this application;
FIG. 2 is a diagram of a structure of an energy storage system according to this application; and
FIG. 3 is a diagram of another structure of an energy storage system according to this application.

### DESCRIPTION OF EMBODIMENTS

An energy storage system provided in this application may be applicable to a plurality of application fields such as the energy-storage power backup field (for example, power backup fields such as household energy storage, industrial and commercial energy storage, power station energy storage, and power batteries), the new energy intelligent microgrid field, and the power transmission and distribution field, and may be applicable to different application scenarios, for example, an energy storage and power supply scenario, a solar-storage hybrid power supply scenario, and a UPS power supply scenario. The following provides descriptions by using the energy storage and power supply scenario as an example.

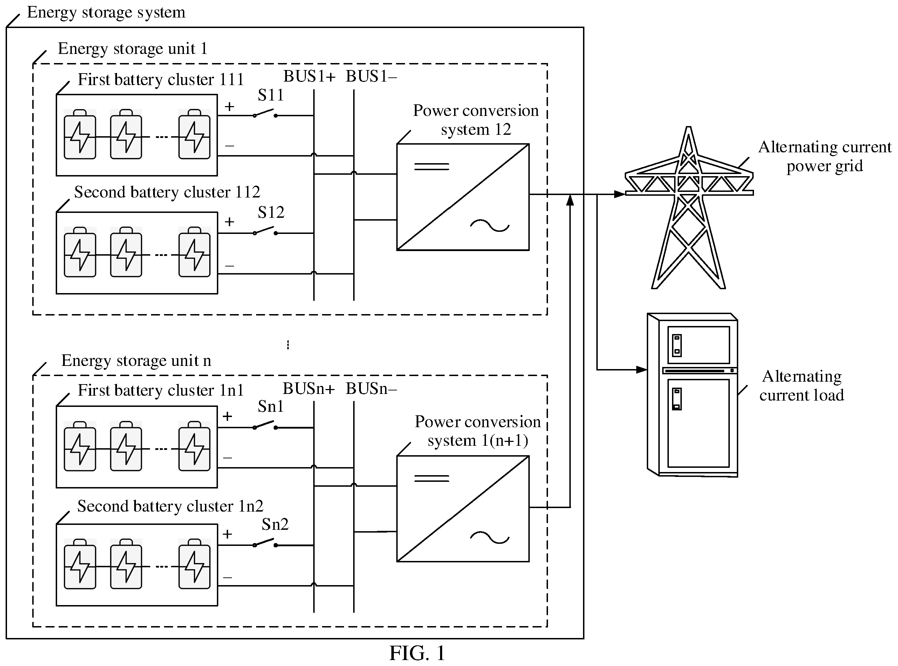

Refer to FIG. 1. FIG. 1 is a diagram of an application scenario of an energy storage system according to this application. In an energy storage and power supply scenario, the energy storage system provided in this application is the energy storage system shown in FIG. 1. The energy storage system includes an energy storage unit 1, ..., and an energy storage unit n, where n is an integer greater than 1. The energy storage unit 1 includes a first battery cluster 111, a second battery cluster 112, a first switch S11, a second switch S12, a direct current bus (including a positive direct current bus BUS1+ and a negative direct current bus BUS1-), and a power conversion system 12. One end obtained after a plurality of battery cells in the first battery cluster 111 are connected in series/parallel is connected to the positive direct current bus BUS 1+ through the first switch S11. The other end obtained after the plurality of battery cells in the first battery cluster 111 are connected in series/parallel is connected to the negative direct current bus BUS1-. One end obtained after a plurality of battery cells in the second battery cluster 112 are connected in series/parallel is connected to the positive direct current bus BUS1+ through the second switch S12. The other end obtained after the plurality of battery cells in the second battery cluster 112 are connected in series/parallel is connected to the negative direct current bus BUS1-. A direct current end of the power conversion system 12 is connected to the positive direct current bus BUS1+ and the negative direct current bus BUS1-. ... The energy storage unit n includes a first battery cluster 1n1, a second battery cluster 1n2, a first switch Sn1, a second switch Sn2, a direct current bus (including a positive direct current bus BUSn+ and a negative direct current bus BUSn-), and a power conversion system 1(n+1). One end obtained after a plurality of battery cells in the first battery cluster 1n1 are connected in series/parallel is connected to the positive direct current bus BUSn+ through the first switch Sn1. The other end obtained after the plurality of battery cells in the first battery cluster 1n1 are connected in series/parallel is connected to the negative direct current bus BUSn-. One end obtained after a plurality of battery cells in the second battery cluster 1n2 are connected in series/parallel is connected to the positive direct current bus BUSn+ through the second switch Sn2. The other end obtained after the plurality of battery cells in the second battery cluster 1n2 are connected in series/parallel is connected to the negative direct current bus BUSn-. A direct current end of the power conversion system 1(n+1) is connected to the positive direct current bus BUSn+ and the negative direct current bus BUSn-. After being connected in parallel, an alternating current end of the power conversion system 12, ..., and an alternating current end of the power conversion system 1(n+1) are connected to an alternating current power grid and an alternating current load.

Operating principles of all of the n energy storage units are the same. Therefore, for ease of description, the energy storage unit 1 is described below as an example.

After the energy storage system starts to run, when the power conversion system 12 in each energy storage unit is electrically connected to the power grid (that is, the energy storage system is in a grid-connected state), an absolute value of a difference between a voltage of the first battery cluster 111 and a voltage of the second battery cluster 112 (hereinafter referred to as the absolute value of the difference between the voltages of the first battery cluster 111 and the second battery cluster 112) is greater than a first voltage threshold, the first switch S11 is open, and the second switch S12 is closed, the power conversion system transfers electric energy of the second battery cluster 112 to the power grid, or transfers electric energy of the power grid to the second battery cluster 112. The first switch S11 is closed when the absolute value of the difference between the voltages of the first battery cluster 111 and the second battery cluster 112 is less than or equal to the first voltage threshold. After the first switch S11 is closed, the power conversion system 12 sequentially performs direct current conversion and inversion on a direct current voltage between the positive direct current bus BUS1+ and the negative direct current bus BUS1-, and outputs an alternating current to the alternating current power grid and the alternating current load, to implement power supply to the alternating current power grid and the alternating current load.

It may be understood that in each energy storage unit, before both the first battery cluster and the second battery cluster are connected in parallel to the direct current bus, the voltages of the first battery cluster and the second battery cluster are detected first. In addition, when the energy storage system is in the grid-connected state, and the absolute value of the difference between the voltages of the first battery cluster and the second battery cluster in each energy storage unit is greater than the first voltage threshold, each energy storage unit first connects its own second battery cluster in parallel to the direct current bus, and then uses its own power conversion system to transfer the electric energy of the second battery cluster to the power grid, or transfer the electric energy of the power grid to the second battery cluster, so that the absolute value of the difference between the voltages of the first battery cluster and the second battery cluster in each energy storage unit is less than or equal to the first voltage threshold. Each energy storage unit connects the first battery cluster in parallel to the direct current bus only when the absolute value of the difference between the voltages of the first battery cluster and the second battery cluster in the energy storage unit is less than or equal to the first voltage threshold. In simple terms, in each energy storage unit, both the first battery cluster and the second battery cluster are connected in parallel to the direct current bus only when the absolute value of the difference between their voltages is less than or equal to the first voltage threshold. An inrush current generated in a process of connecting the first battery cluster and the second battery cluster in parallel to the direct current bus is caused by the difference between the voltages of the first battery cluster and the second battery cluster, and a magnitude of the inrush current is positively correlated with the absolute value of the difference between the voltages. Therefore, the inrush current generated in the process of connecting the first battery cluster and the second battery cluster in each energy storage unit in parallel to the direct current bus can be effectively reduced.

The foregoing description is merely an example of the application scenario of the energy storage system provided in this application, but is not exhaustive. The application scenario is not limited in this application.

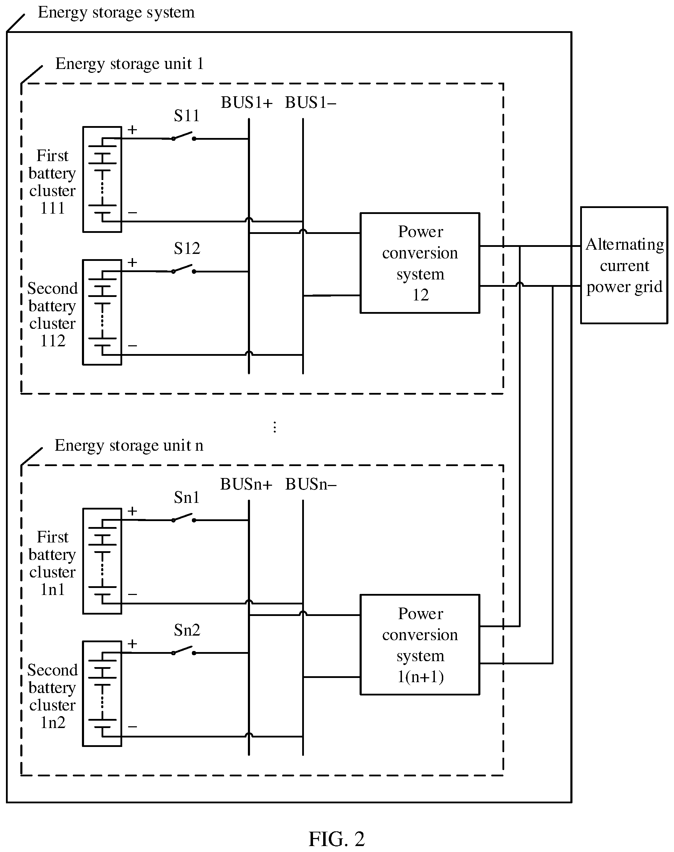

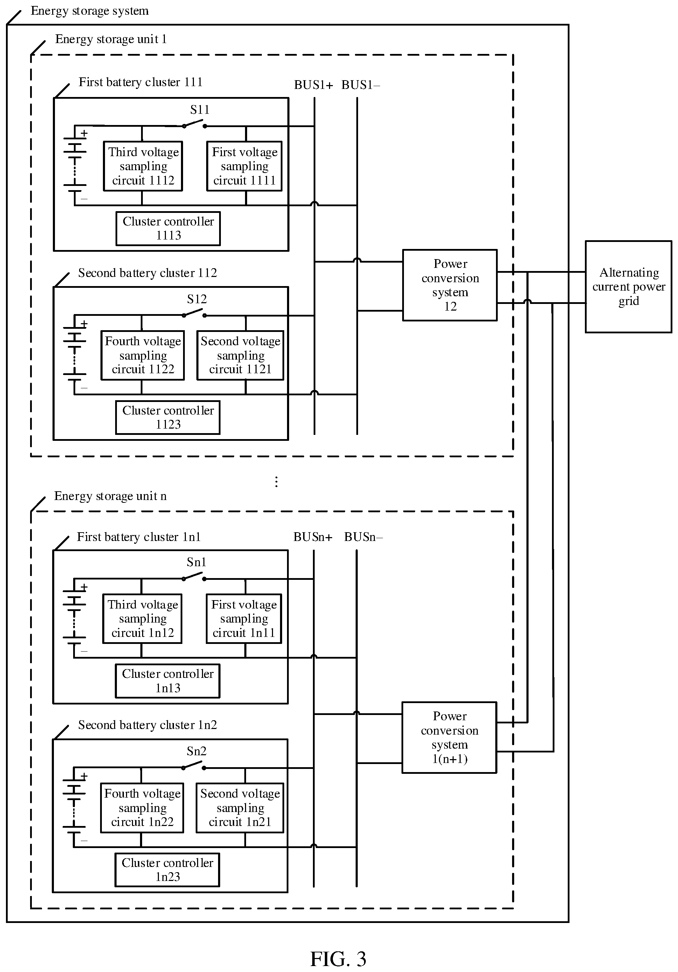

With reference to FIG. 2 and FIG. 3, the following describes an example of an operating principle of the energy storage system provided in this application.

Refer to FIG. 2. FIG. 2 is a diagram of a structure of an energy storage system according to this application. As shown in FIG. 2, the energy storage system includes an energy storage unit 1, ..., and an energy storage unit n, where n is an integer greater than 1. The energy storage unit 1 includes a first battery cluster 111, a second battery cluster 112, a first switch S11, a second switch S12, a direct current bus (including a positive direct current bus BUS1+ and a negative direct current bus BUS1-), and a power conversion system 12. The first switch S11 is configured to establish or disconnect circuit connection between the direct current bus in the energy storage unit 1 and a plurality of battery cells in the first battery cluster 111. For example, a position of the first switch S11 is as follows: One end (a positive electrode) obtained after the plurality of battery cells in the first battery cluster 111 are connected in series is connected to the positive direct current bus BUS 1+ through the first switch S11. The other end (a negative electrode) obtained after the plurality of battery cells in the first battery cluster 111 are connected in series is connected to the negative direct current bus BUS1-. The second switch S12 is configured to establish or disconnect circuit connection between the direct current bus in the energy storage unit 1 and a plurality of battery cells in the second battery cluster 112. For example, a position of the second switch S12 is as follows: One end (a positive electrode) obtained after the plurality of battery cells in the second battery cluster 112 are connected in series is connected to the positive direct current bus BUS 1+ through the second switch S12. The other end (a negative electrode) obtained after the plurality of battery cells in the second battery cluster 112 are connected in series is connected to the negative direct current bus BUS1-. ... The energy storage unit n includes a first battery cluster 1n1, a second battery cluster 1n2, a first switch Sn1, a second switch Sn2, a direct current bus (including a positive direct current bus BUSn+ and a negative direct current bus BUSn-), and a power conversion system 1(n+1). The first switch Sn1 is configured to establish or disconnect circuit connection between the direct current bus in the energy storage unit n and a plurality of battery cells in the first battery cluster 1n1. For example, a position of the first switch Sn1 is as follows: One end (a positive electrode) obtained after the plurality of battery cells in the first battery cluster 1n1 are connected in series is connected to the positive direct current bus BUSn+ through the first switch Sn1. The other end (a negative electrode) obtained after the plurality of battery cells in the first battery cluster 1n1 are connected in series is connected to the negative direct current bus BUSn-. One end (a positive electrode) obtained after a plurality of battery cells in the second battery cluster 1n2 are connected in series is connected to the positive direct current bus BUSn+ through the second switch Sn2. The second switch Sn2 is configured to establish or disconnect circuit connection between the direct current bus in the energy storage unit n and the plurality of battery cells in the second battery cluster 1n2. For example, a position of the second switch Sn2 is as follows: The other end (a negative electrode) obtained after the plurality of battery cells in the second battery cluster 1n2 are connected in series is connected to the negative direct current bus BUSn-. Herein, for a connection relationship between the direct current bus and the power conversion system in each energy storage unit, refer to the description of a corresponding part in the foregoing embodiment. Details are not described herein again.

Optionally, in each energy storage unit, the first switch may alternatively be connected between the negative direct current bus and the negative electrode of the plurality of battery cells in the first battery cluster after these battery cells are connected in series; and the second switch may alternatively be connected between the negative direct current bus and the negative electrode of the plurality of battery cells in the second battery cluster after these battery cells are connected in series. Alternatively, there may be two first switches and two second switches in each energy storage unit. One of the two first switches is connected between the positive direct current bus and the positive electrode of the plurality of battery cells in the first battery cluster after these battery cells are connected in series; and the other first switch is connected between the negative direct current bus and the negative electrode of the plurality of battery cells in the first battery cluster after these battery cells are connected in series. One of the two second switches is connected between the positive direct current bus and the positive electrode of the plurality of battery cells in the second battery cluster after these battery cells are connected in series; and the other second switch is connected between the negative direct current bus and the negative electrode of the plurality of battery cells in the second battery cluster after these battery cells are connected in series. In this application, a connection manner of a plurality of battery cells in a battery cluster may alternatively be parallel connection or series-parallel hybrid connection.

In addition, the first switch S11 may be disposed inside or outside the first battery cluster 111; the second switch S12 may be disposed inside or outside the second battery cluster 112; ...; the first switch Sn1 may be disposed inside or outside the first battery cluster In1; and the second switch Sn2 may be disposed inside or outside the second battery cluster 1n2. The first switch and the second switch in each energy storage unit may be mechanical switches (for example, contactors or relays), or may be semiconductor switches, for example, a metal oxide semiconductor field effect transistor (metal oxide semiconductor Field Effect Transistor, MOSFET), an insulated gate bipolar transistor (Insulated Gate Bipolar Transistor, IGBT), or a gallium nitride (Gallium Nitride, GaN) transistor.

Further, each battery cluster shown in FIG. 2 further includes two voltage sampling circuits and a cluster controller. For details, refer to FIG. 3. As shown in FIG. 3, the first battery cluster 111 further includes a first voltage sampling circuit 1111, a third voltage sampling circuit 1112, and a cluster controller 1113; the second battery cluster 112 further includes a second voltage sampling circuit 1121, a fourth voltage sampling circuit 1122, and a cluster controller 1123; a communication connection is established between the cluster controller 1123 and the cluster controller 1113; ...; the first battery cluster In1 further includes a first voltage sampling circuit 1n11, a third voltage sampling circuit 1n12, and a cluster controller 1n13; the second battery cluster In2 further includes a second voltage sampling circuit 1n21, a fourth voltage sampling circuit 1n22, and a cluster controller 1n23; and a communication connection is established between the cluster controller 1n23 and the cluster controller 1n13. In addition, each of the first battery cluster and the second battery cluster in each energy storage unit further includes a cluster control box (not shown in the figure). In each energy storage unit, the first switch, the first voltage sampling circuit, the third voltage sampling circuit, and the cluster controller of the first battery cluster may all be disposed in the cluster control box of the first battery cluster; and the second switch, the second voltage sampling circuit, the fourth voltage sampling circuit, and the cluster controller of the second battery cluster may all be disposed in the cluster control box of the second battery cluster. Optionally, the first battery cluster in each energy storage unit further includes a first protective element; the second battery cluster in each energy storage unit further includes a second protective element; the first protective element is disposed between the direct current bus and the plurality of battery cells of the first battery cluster; and the second protective element is disposed between the direct current bus and the plurality of battery cells of the second battery cluster. The first protective element and the second protective element are configured to implement fault isolation, and each include an overcurrent protection component, for example, a fuse wire, a fuse Hifuse, or a circuit breaker.

In an implementation scenario, all the power conversion systems in the n energy storage units are electrically connected to an alternating current power grid, that is, the energy storage system is in a grid-connected state.

For each power conversion system, when the energy storage system is in the grid-connected state, and in an energy storage unit including the power conversion system, an absolute value of a difference between voltages of the first battery cluster and the second battery cluster is greater than a first voltage threshold, the first switch is open, and the second switch is closed, the power conversion system transfers electric energy of the second battery cluster to the power grid, or transfers electric energy of the power grid to the second battery cluster, so that the absolute value of the difference between the voltages of the first battery cluster and the second battery cluster in each energy storage unit is less than or equal to the first voltage threshold. Subsequently, in each energy storage unit, when the absolute value of the difference between the voltages of the first battery cluster and the second battery cluster is less than or equal to the first voltage threshold, the first switch is closed.

The energy storage system further includes a first controller. The first controller may be any one of a cluster controller 1113 of the first battery cluster 111, a container controller (not shown in the figure) of an energy storage container including all the battery clusters in the n energy storage units, and a system controller (not shown in the figure) of the energy storage system. Operating principles of connecting a plurality of battery clusters in parallel to a direct current bus in each energy storage unit are the same. Therefore, for ease of description, an example in which the first controller is the cluster controller 1113 and the energy storage unit is the energy storage unit 1 is described below.

Specifically, before the energy storage system supplies power to the alternating current power grid, both the first switch and the second switch in each energy storage unit are in an open state, and the power conversion system in each energy storage unit is in an off state. The cluster controller 1113 controls the first switch S11 to be closed, and collects, when the first switch S11 is closed and the second switch S12 is open, a voltage of the direct current bus in the energy storage unit 1 (namely, a voltage between the positive direct current bus BUS1+ and the negative direct current bus BUS1-) by using the first voltage sampling circuit 1111, to obtain a first bus voltage Vbus1. When the first switch S11 is closed and the second switch S12 is open, the cluster controller 1113 sends a bus voltage acquisition instruction to the cluster controller 1123. Upon receiving the bus voltage acquisition instruction, the cluster controller 1123 collects the voltage between the positive direct current bus BUS1+ and the negative direct current bus BUS1-by using the second voltage sampling circuit 1121, to obtain a second bus voltage Vbus2, and returns the second bus voltage Vbus2 to the cluster controller 1113. Upon receiving the second bus voltage Vbus2, the cluster controller 1113 controls the first switch S11 to be open, and sends a control instruction to the cluster controller 1123, so that the cluster controller 1123 controls the second switch S12 to be closed. When the first switch S11 is open and the second switch S12 is closed, the cluster controller 1113 obtains, by sending a bus voltage acquisition instruction to the cluster controller 1123, a voltage between the positive direct current bus BUS1+ and the negative direct current bus BUS1-that is collected by the second voltage sampling circuit 1121, to obtain a third bus voltage Vbus3. Then, when the first switch S11 is closed and the second switch S12 is open, the first bus voltage Vbus1 collected by the first voltage sampling circuit 1111 is theoretically equal to the second bus voltage Vbus2 collected by the second voltage sampling circuit 1121. Therefore, subsequently, the cluster controller 1113 may calculate a sampling error ε1 = Vbus1 - Vbus2 between the first voltage sampling circuit 1111 and the second voltage sampling circuit 1121, so that a voltage Vbus3' = ε1 + Vbus3 = Vbus1 - Vbus2 + Vbus3 that is obtained by converting the third bus voltage Vbus3 and using the first voltage sampling circuit 1111 as a sampling datum may be calculated. Further, it may be obtained that when the first voltage sampling circuit 1111 is used as a sampling datum, the voltage of the first battery cluster 111 is Vbus1, and the voltage of the second battery cluster 112 is Vbus3'.

Then, because the second switch S12 is still in the closed state, when a difference obtained by subtracting the voltage (Vbus3') of the second battery cluster 112 from the voltage (Vbus1) of the first battery cluster 111 is greater than the first voltage threshold, the cluster controller 1113 controls the power conversion system 12 by sending a control instruction to the power conversion system 12, thereby enabling the second battery cluster 112 to be in a charging state. Specifically, the power conversion system 12 is controlled to transfer the electric energy of the alternating current power grid to the second battery cluster 112, so that the absolute value of the difference between the voltages of the first battery cluster 111 and the second battery cluster 112 is less than or equal to the first voltage threshold; or when a difference obtained by subtracting the voltage (Vbus1) of the first battery cluster 111 from the voltage (Vbus3') of the second battery cluster 112 is greater than the first voltage threshold, the cluster controller 1113 controls the power conversion system 12, thereby enabling the second battery cluster 112 to be in a discharging state. Specifically, the power conversion system 12 is controlled to transfer the electric energy of the second battery cluster 112 to the alternating current power grid, so that the absolute value of the difference between the voltages of the first battery cluster 111 and the second battery cluster 112 is less than or equal to the first voltage threshold. The first voltage threshold is a critical voltage value of the absolute value of the difference between the voltages of the first battery cluster and the second battery cluster when an inrush current does not cause damage to the battery cluster. For example, the first voltage threshold is 15 V. Then, when the absolute value of the difference between the voltages of the first battery cluster 111 and the second battery cluster 112 is less than or equal to the first voltage threshold, the cluster controller 1113 controls the first switch S11 to be closed, so that both the first battery cluster 111 and the second battery cluster 112 are connected in parallel to the direct current buses BUS1+ and BUS1-.

It may be understood that the foregoing embodiment is described by using an example in which a voltage of a battery cluster is a bus voltage at a direct current bus connected to the battery cluster. In this application, the voltage of the battery cluster may alternatively be a voltage across two ends of a plurality of battery cells in the battery cluster after these battery cells are connected in series/parallel. A specific implementation is as follows:

Before the energy storage system supplies power to the alternating current power grid, both the first switch and the second switch in each energy storage unit are in an open state, and the power conversion system in each energy storage unit is in an off state. The cluster controller 1113 controls the first switch S11 to be closed, collects, when the first switch S11 is closed and the second switch S12 is open, a voltage between the positive direct current bus BUS1+ and the negative direct current bus BUS1- by using the first voltage sampling circuit 1111, to obtain a first bus voltage Vbus1, and collects, by using the third voltage sampling circuit 1112, a voltage across two ends of the plurality of battery cells in the first battery cluster 111 after these battery cells are connected in series, to obtain a first voltage V1. When the first switch S11 is closed and the second switch S12 is open, the cluster controller 1113 further obtains a voltage between the positive direct current bus BUS1+ and the negative direct current bus BUS1-that is collected by the second voltage sampling circuit 1121, to obtain a second bus voltage Vbus2. Upon obtaining the second bus voltage Vbus2, the cluster controller 1113 controls the first switch S11 to be open, and controls, by using the cluster controller 1123, the second switch S12 to be closed. When the first switch S11 is open and the second switch S12 is closed, the cluster controller 1113 obtains a voltage between the positive direct current bus BUS1+ and the negative direct current bus BUS1- that is collected by the second voltage sampling circuit 1121, to obtain a third bus voltage Vbus3, and collects, by using the fourth voltage sampling circuit 1122, a voltage across two ends of the plurality of battery cells in the second battery cluster 112 after these battery cells are connected in series, to obtain a second voltage V2. Then, when the first switch S11 is closed and the second switch S12 is open, the first bus voltage Vbus1 collected by the first voltage sampling circuit 1111 is theoretically equal to the second bus voltage Vbus2 collected by the second voltage sampling circuit 1121; when the first switch S11 is closed, the first bus voltage Vbus1 collected by the first voltage sampling circuit 1111 is theoretically equal to the first voltage V1 collected by the third voltage sampling circuit 1112; and when the second switch S12 is closed, the third bus voltage Vbus3 collected by the second voltage sampling circuit 1121 is theoretically equal to the second voltage V2 collected by the fourth voltage sampling circuit 1122. Therefore, subsequently, the cluster controller 1113 may calculate a sampling error ε1 = Vbus1 - Vbus2 between the first voltage sampling circuit 1111 and the second voltage sampling circuit 1121, a sampling error ε2 = V1 - Vbus1 between the third voltage sampling circuit 1112 and the first voltage sampling circuit 1111, and a sampling error ε3 = Vbus3 - V2 between the second voltage sampling circuit 1121 and the fourth voltage sampling circuit 1122. Further, the cluster controller 1113 may calculate a voltage V2' = ε1 + ε2 + ε3 + V2 = V1 - Vbus2 + Vbus3 obtained by converting the second voltage V2 and by using the third voltage sampling circuit 1112 as a sampling datum, so that the following may be obtained: When the third voltage sampling circuit 1112 is used as a sampling datum, the voltage of the first battery cluster 111 is V1, and the voltage of the second battery cluster 112 is V2'.

Then, because the second switch S12 is still in the closed state, when a difference obtained by subtracting the voltage (V2') of the second battery cluster 112 from the voltage (V1) of the first battery cluster 111 is greater than the first voltage threshold, the cluster controller 1113 controls the power conversion system 12, thereby enabling the second battery cluster 112 to be in a charging state. Specifically, the power conversion system 12 is controlled to transfer the electric energy of the alternating current power grid to the second battery cluster 112, so that the absolute value of the difference between the voltages of the first battery cluster 111 and the second battery cluster 112 is less than or equal to the first voltage threshold; or when a difference obtained by subtracting the voltage (V1) of the first battery cluster 111 from the voltage (V2') of the second battery cluster 112 is greater than the first voltage threshold, the cluster controller 1113 controls the power conversion system 12, thereby enabling the second battery cluster 112 to be in a discharging state. Specifically, the power conversion system 12 is controlled to transfer the electric energy of the second battery cluster 112 to the alternating current power grid, so that the absolute value of the difference between the voltages of the first battery cluster 111 and the second battery cluster 112 is less than or equal to the first voltage threshold. Then, when the absolute value of the difference between the voltages of the first battery cluster 111 and the second battery cluster 112 is less than or equal to the first voltage threshold, the cluster controller 1113 controls the first switch S11 to be closed, so that both the first battery cluster 111 and the second battery cluster 112 are connected in parallel to the direct current buses BUS1+ and BUS1-.

It may be understood that the following is taken into consideration: There is a sampling error between two voltage sampling circuits even when they have a same circuit structure, and the sampling error affects a result of controlling the difference between the voltages of the first battery cluster and the second battery cluster. Consequently, the following problem is caused: Both the first battery cluster and the second battery cluster are connected in parallel to the direct current bus when the cluster controller incorrectly determines that the absolute value of the difference between the voltages of the first battery cluster and the second battery cluster is less than or equal to the first voltage threshold. As a result, the effect of controlling an inrush current is poor. Based on this, the energy storage unit provided in this application may convert, based on a sampling error between every two voltage sampling circuits in a plurality of voltage sampling circuits, a plurality of voltages collected by the plurality of voltage sampling circuits into voltages that are obtained by using a same voltage sampling circuit as a sampling datum. In this way, a sampling error between a voltage of the first battery cluster and a voltage of the second battery cluster that are collected by different voltage sampling circuits can be effectively avoided. Therefore, the following case can be effectively avoided: Due to the sampling error, it is incorrectly determined that the absolute value of the difference between the voltages of the first battery cluster and the second battery cluster is less than or equal to the first voltage threshold. In this way, an inrush current generated in a process of connecting the first battery cluster and the second battery cluster in parallel to the direct current bus is effectively reduced.

It should be noted that in order to completely avoid a sampling error between different voltage sampling circuits, a same voltage sampling circuit may be directly used in an ideal case to collect the voltage of the first battery cluster and the voltage of the second battery cluster. However, when a quantity of battery clusters included in the energy storage unit increases with an increase of an energy storage capacity, a manner of using a same voltage sampling circuit to collect voltages of a relatively large quantity of battery clusters makes cabling between the same voltage sampling circuit and the plurality of battery clusters difficult. Consequently, costs of the energy storage system are increased. In addition, when a fault (for example, a short circuit) occurs in one battery cluster, a manner of using a same voltage sampling circuit to collect voltages of a relatively large quantity of battery clusters causes the fault to spread to other battery clusters. Consequently, safety of the energy storage system deteriorates. Based on this, in consideration of costs and safety of the energy storage system, a sampling manner of collecting voltages of different battery clusters by using different voltage sampling voltages is usually used in engineering implementation.

Further, a polarized voltage of a battery cluster (namely, a voltage loss caused by mass transfer imbalance in an internal electrochemical reaction in a charging or discharging process of the battery cluster) causes an error between an actual voltage value of the battery cluster and a detected voltage value (namely, a voltage value collected by a voltage sampling circuit) of the battery cluster, and the error also affects the effect of controlling an inrush current. Therefore, in order to reduce impact of the polarized voltage of the battery cluster, the energy storage unit further controls a current (namely, a charging current or a discharging current) of the second battery cluster in a process of controlling the electric energy to transfer between the second battery cluster and the power grid. In addition, the impact of the polarized voltage of the battery cluster is also considered in a trigger condition for controlling the first switch to be closed. Details are as follows:

In a process of controlling the electric energy to transfer between the second battery cluster 112 and the alternating current power grid, the cluster controller 1113 controls a current value of the second battery cluster 112 to be a first current value by controlling the power conversion system 12 when the absolute value of the difference between the voltages of the first battery cluster 111 and the second battery cluster 112 is greater than or equal to a second voltage threshold, and controls a current of the second battery cluster 112 to be a second current value by controlling the power conversion system 12 when the absolute value of the difference between the voltages of the first battery cluster 111 and the second battery cluster 112 is greater than the first voltage threshold and less than the second voltage threshold. The second voltage threshold is greater than the first voltage threshold. The second current value is less than the first current value. Optionally, in a process of controlling the electric energy to transfer between the second battery cluster 112 and the alternating current power grid, the cluster controller 1113 further controls, by controlling the power conversion system 12, the current value of the second battery cluster 112 to be positively correlated with the absolute value of the difference between the voltages of the first battery cluster 111 and the second battery cluster 112.

It may be understood that in a process of controlling the electric energy to transfer between the second battery cluster 112 and the power grid, the cluster controller 1113 may enable the current of the second battery cluster 112 to be a large current when the absolute value of the difference between the voltages of the first battery cluster 111 and the second battery cluster 112 is relatively large, and enable the current of the second battery cluster 112 to be a small current when the absolute value of the difference between the voltages of the first battery cluster 111 and the second battery cluster 112 is relatively small. In this way, when the absolute value of the difference between the voltages of the first battery cluster 111 and the second battery cluster 112 is relatively large, the absolute value of the difference between the voltages approaches the first voltage threshold at a relatively fast speed. Because a magnitude of a polarized voltage of a battery cluster is positively correlated with a current value of the battery cluster, impact of the polarized voltage of the second battery cluster 112 when the absolute value of the difference between the voltages of the first battery cluster 111 and the second battery cluster 112 is relatively small can be further reduced. This can not only quickly connect the first battery cluster 111 and the second battery cluster 112 in parallel to the direct current bus, but also reduce the impact of the polarized voltage of the second battery cluster 112 on the effect of controlling the difference between the voltages of the first battery cluster 111 and the second battery cluster 112.

Then, when the absolute value of the difference between the voltages of the first battery cluster 111 and the second battery cluster 112 is less than or equal to the first voltage threshold, and the current of the second battery cluster 112 is less than or equal to a current threshold, the cluster controller 1113 controls the first switch S11 to be closed, so that both the first battery cluster 111 and the second battery cluster 112 are connected in parallel to the direct current buses BUS1+ and BUS1-. The current threshold may be zero, or may be a value close to zero. In this way, it can be ensured that the first switch S11 is closed only when the trigger condition includes the current of the second battery cluster 112 being approximately zero. Therefore, an error between an actual voltage value and a detected voltage value of the second battery cluster 112 caused by the polarized voltage of the second battery cluster 112 can be effectively reduced, thereby effectively reducing an inrush current generated in a process of connecting the first battery cluster 111 and the second battery cluster 112 in parallel to the direct current bus.

A polarized voltage of a battery cluster does not disappear immediately after charging or discharging of the battery cluster ends. Therefore, in order to further reduce an error between an actual voltage value and a detected voltage value of the battery cluster caused by a polarized voltage of the battery cluster, and further reduce an inrush current generated in a process of connecting the first battery cluster 111 and the second battery cluster 112 in parallel to the direct current bus, the cluster controller 1113 further controls the power conversion system 12 to shut down when the absolute value of the difference between the voltages of the first battery cluster 111 and the second battery cluster 112 is less than or equal to the first voltage threshold, and controls, after the power conversion system 12 has been shut down for first duration, the first switch S11 to be closed when the absolute value of the difference between the voltages of the first battery cluster 111 and the second battery cluster 112 is less than or equal to the first voltage threshold, so that both the first battery cluster 111 and the second battery cluster 112 are connected in parallel to the direct current buses BUS1+ and BUS1-. For example, the first duration is greater than or equal to duration required for the polarized voltage of the second battery cluster 112 to disappear after charging ends. For example, the first duration is 30s. Both a voltage of the first battery cluster 111 and a voltage of the second battery cluster 112 that are in a closing trigger condition of the first switch S11 are voltages of the two battery clusters that are obtained a period of time after charging or discharging of the second battery cluster 112 ends (that is, after the polarized voltage of the second battery cluster 112 disappears). Therefore, an error between an actual voltage value and a detected voltage value of the second battery cluster 112 that is caused by the polarized voltage of the second battery cluster 112 can be effectively avoided, thereby further effectively reducing an inrush current generated in a process of connecting the first battery cluster 111 and the second battery cluster 112 in parallel to the direct current bus.

In another implementation scenario, all the power conversion systems in the n energy storage units are electrically disconnected from the alternating current power grid, that is, the energy storage system is in an off-grid state.

When the energy storage system is in the off-grid state, the battery clusters in each energy storage unit cannot exchange electric energy with the power grid. Therefore, a manner of exchanging electric energy between battery clusters in two different energy storage units is used in this implementation scenario, so that an absolute value of a difference between voltages of two battery clusters in a same energy storage unit is less than or equal to the first voltage threshold. Details are as follows:

When the energy storage system is in the off-grid state, the difference obtained by subtracting the voltage of the first battery cluster in the first energy storage unit from the voltage of the second battery cluster in the first energy storage unit is greater than the first voltage threshold, the first switch in the first energy storage unit is open, and the second switch in the first energy storage unit is closed, the power conversion system in the first energy storage unit transfers electric energy of the second battery cluster in the first energy storage unit to an alternating current end of the power conversion system in the first energy storage unit. When the energy storage system is in the off-grid state, the difference obtained by subtracting the voltage of the first battery cluster in the first energy storage unit from the voltage of the second battery cluster in the first energy storage unit is greater than the first voltage threshold, one switch in the second energy storage unit is open, and the other switch is closed, the power conversion system in the second energy storage unit transfers electric energy at an alternating current end of the power conversion system in the second energy storage unit to a battery cluster that is connected to the other switch and that is in the second energy storage unit. Alternatively, when the energy storage system is in the off-grid state, the difference obtained by subtracting the voltage of the second battery cluster in the first energy storage unit from the voltage of the first battery cluster in the first energy storage unit is greater than the first voltage threshold, one switch in the second energy storage unit is open, and the other switch is closed, the power conversion system in the second energy storage unit transfers, to an alternating current end of the power conversion system in the second energy storage unit, electric energy of a battery cluster that is connected to the other switch and that is in the second energy storage unit; and when the energy storage system is in the off-grid state, the difference obtained by subtracting the voltage of the second battery cluster in the first energy storage unit from the voltage of the first battery cluster in the first energy storage unit is greater than the first voltage threshold, the first switch in the first energy storage unit is open, and the second switch in the first energy storage unit is closed, the power conversion system in the first energy storage unit transfers electric energy at an alternating current end of the power conversion system in the first energy storage unit to the second battery cluster in the first energy storage unit. Subsequently, in the first energy storage unit, when the absolute value of the difference between the voltages of the first battery cluster and the second battery cluster is less than or equal to the first voltage threshold, the first switch is closed.

The energy storage system further includes a second controller. The second controller may be a container controller of an energy storage container including all battery clusters in the n energy storage units, or a system controller of the energy storage system. Operating principles of connecting a plurality of battery clusters in parallel to a direct current bus in each energy storage unit are the same. Therefore, for ease of description, an example in which the second controller is the system controller, the first energy storage unit is the energy storage unit 1, and the second energy storage unit is the energy storage unit n is described below.

Specifically, before the energy storage system supplies power to the alternating current power grid, both the first switch and the second switch in each energy storage unit are in an open state, and the power conversion system in each energy storage unit is in an off state. The system controller controls the first switch S11 and the second switch S12 to be closed or open, collects, by using voltage sampling circuits in the first battery cluster 111 and the second battery cluster 112, voltages of the first switch S11 and the second switch S12 when they are closed or open, and calculates the voltage of the first battery cluster 111 and the voltage of the second battery cluster 112, where the voltage of the first battery cluster 111 is Vbus1, and the voltage of the second battery cluster 112 is Vbus3 ; or the voltage of the first battery cluster 111 is V1, and the voltage of the second battery cluster 112 is V2'. For a specific implementation of this part, refer to the description of the corresponding part in the foregoing implementation scenario. Details are not described herein again.

Then, when the absolute value of the difference between the voltages of the first battery cluster 111 and the second battery cluster 112 is greater than the first voltage threshold, the system controller sends a control instruction to the cluster controller in the energy storage unit n, so that the cluster controller in the energy storage unit n controls either the first switch Sn1 or the second switch Sn2 to be closed. The following uses an example in which the first switch Sn1 is controlled to be closed. Because the first switch S11 is in the open state, and the second switch S12 is in the closed state, when the energy storage system is in the off-grid state, the difference obtained by subtracting the voltage of the first battery cluster 111 from the voltage of the second battery cluster 112 is greater than the first voltage threshold, the first switch S11 is open, and the second switch S12 is closed, the system controller controls, by sending a control instruction to the power conversion system 12, the power conversion system 12 to enable the second battery cluster 112 to be in the discharging state. Specifically, the power conversion system 12 is controlled to transfer the electric energy of the second battery cluster 112 to the alternating current end of the power conversion system 12. Further, when the energy storage system is in the off-grid state, the difference obtained by subtracting the voltage of the first battery cluster 111 from the voltage of the second battery cluster 112 is greater than the first voltage threshold, the first switch Sn1 is closed, and the second switch Sn2 is open, the system controller controls, by sending a control instruction to the power conversion system 1(n+1), the power conversion system 1(n+1) to enable the first battery cluster 1n1 to be in the charging state. Specifically, the power conversion system 1(n+1) is controlled to transfer electric energy at the alternating current end of the power conversion system 1(n+1) to the first battery cluster 1n1, so that the absolute value of the difference between the voltages of the first battery cluster 111 and the second battery cluster 112 is less than or equal to the first voltage threshold. Alternatively, when the energy storage system is in the off-grid state, the difference obtained by subtracting the voltage of the second battery cluster 112 from the voltage of the first battery cluster 111 is greater than the first voltage threshold, the first switch Sn1 is closed, and the second switch Sn2 is open, the system controller controls, by sending a control instruction to the power conversion system 1(n+1), the power conversion system 1(n+1) to enable the first battery cluster 1n1 to be in the discharging state. Specifically, the power conversion system 1(n+1) is controlled to transfer electric energy of the first battery cluster In1 to the alternating current end of the power conversion system 1(n+1). Further, when the energy storage system is in the off-grid state, the difference obtained by subtracting the voltage of the second battery cluster 112 from the voltage of the first battery cluster 111 is greater than the first voltage threshold, the first switch S11 is open, and the second switch S12 is closed, the system controller controls, by sending a control instruction to the power conversion system 12, the power conversion system 12 to enable the second battery cluster 112 to be in the charging state. Specifically, the power conversion system 12 is controlled to transfer electric energy at the alternating current end of the power conversion system 12 to the second battery cluster 112, so that the absolute value of the difference between the voltages of the first battery cluster 111 and the second battery cluster 112 is less than or equal to the first voltage threshold. Then, when the absolute value of the difference between the voltages of the first battery cluster 111 and the second battery cluster 112 is less than or equal to the first voltage threshold, the system controller controls, by sending a control instruction to the cluster controller 1113, the first switch S11 to be closed, so that both the first battery cluster 111 and the second battery cluster 112 are connected in parallel to the direct current buses BUS1+ and BUS1-.

Similar to the foregoing implementation scenario, a polarized voltage of a battery cluster causes an error between an actual voltage value of the battery cluster and a detected voltage value of the battery cluster, and the error also affects the effect of controlling an inrush current. Based on this, in order to reduce impact of the polarized voltage of the battery cluster, the system controller further controls a current of the second battery cluster 112 in a process of controlling the electric energy to transfer between the second battery cluster 112 and the alternating current end of the power conversion system 12. In addition, the impact of the polarized voltage of the battery cluster is also considered in a trigger condition for controlling the first switch S 11 to be closed. A specific implementation of this implementation scenario in which a polarized voltage of a battery cluster is considered is similar to a specific implementation of the foregoing implementation scenario in which a polarized voltage of a battery cluster is considered. The specific implementation of this implementation scenario in which a polarized voltage of a battery cluster is considered can be obtained by just replacing "in a process of controlling the electric energy to transfer between the second battery cluster 112 and the power grid" in the specific implementation of the foregoing implementation scenario in which a polarized voltage of a battery cluster is considered with "in a process of controlling the electric energy to transfer between the second battery cluster 112 and the alternating current end of the power conversion system 12", and replacing "cluster controller 1113" therein with "system controller". Details are not described herein again.

In this application, in each energy storage unit, before both the first battery cluster and the second battery cluster are connected in parallel to the direct current bus, the voltages of the first battery cluster and the second battery cluster are detected first. When the absolute value of the difference between the voltages of the first battery cluster and the second battery cluster in each energy storage unit is greater than the first voltage threshold, the energy storage unit first connects its own second battery cluster in parallel to its direct current bus. In addition, when the energy storage system is in the grid-connected state, each energy storage unit controls, by using its own power conversion system, its second battery cluster to exchange electric energy with the power grid, so that the absolute value of the difference between the voltages of the first battery cluster and the second battery cluster in each energy storage unit is less than or equal to the first voltage threshold. Alternatively, when the energy storage system is in the off-grid state, two power conversion systems in any two energy storage units control the second battery cluster of one of the any two energy storage units and a battery cluster of the other energy storage unit to perform electric energy exchange, so that the absolute value of the difference between the voltages of the first battery cluster and the second battery cluster in each energy storage unit is less than or equal to the first voltage threshold. Subsequently, each energy storage unit connects the first battery cluster in parallel to the direct current bus only when the absolute value of the difference between the voltages of the first battery cluster and the second battery cluster in the energy storage unit is less than or equal to the first voltage threshold. In simple terms, in each energy storage unit, both the first battery cluster and the second battery cluster are connected in parallel to the direct current bus only when the absolute value of the difference between their voltages is less than or equal to the first voltage threshold. Therefore, the inrush current generated in the process of connecting the first battery cluster and the second battery cluster in each energy storage unit in parallel to the direct current bus can be effectively reduced. In addition, based on the first switch and the second switch in each energy storage unit, and a control manner of reducing an inrush current generated during parallel connection of a plurality of battery clusters, the energy storage system may flexibly connect or withdraw a single battery cluster based on an actual requirement, thereby implementing unlimited expansion of the energy storage system, and fully using each cycle life of the battery cluster without being affected by an inter-cluster SOX difference. Moreover, the energy storage system may also flexibly select and configure a quantity of power conversion systems based on an actual requirement, and perform parallel operation, to implement different output powers, thereby implementing arbitrary expansion of an output power of the energy storage system.

It should be noted that in this application, a control manner used for reducing an inrush current generated during parallel connection of a plurality of battery clusters is not limited to being applied to an energy storage battery cluster. Actually, this manner may be applied to all application scenarios of energized parallel operation, for example, a parallel operation scenario of direct current modules of a charging pile, a parallel operation scenario of power conversion systems, a parallel operation scenario of power conversion modules on an output bus side, a parallel operation scenario of a power conversion unit and a battery cluster, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An energy storage system, wherein the energy storage system comprises a plurality of energy storage units, and each of the plurality of energy storage units comprises a first battery cluster, a second battery cluster, a first switch, a second switch, a direct current bus, and a power conversion system, wherein
the first switch is closed or open, to establish or disconnect circuit connection between the direct current bus and a plurality of battery cells in the first battery cluster;
the second switch is closed or open, to establish or disconnect circuit connection between the direct current bus and a plurality of battery cells in the second battery cluster;
a direct current end of the power conversion system is connected to the direct current bus, and alternating current ends of the power conversion systems of the plurality of energy storage units are connected in parallel and then connected to a power grid;
the power conversion system is configured to: when the power conversion system is electrically connected to the power grid, an absolute value of a difference between a voltage of the first battery cluster and a voltage of the second battery cluster is greater than a first voltage threshold, the first switch is open, and the second switch is closed, transfer electric energy of the second battery cluster to the power grid, or transfer electric energy of the power grid to the second battery cluster; and
the first switch is further configured to be closed when the absolute value of the difference between the voltage of the first battery cluster and the voltage of the second battery cluster is less than or equal to the first voltage threshold.

2. The energy storage system according to claim 1, wherein the power conversion system is configured to transfer the electric energy of the power grid to the second battery cluster when the power conversion system is electrically connected to the power grid, a difference obtained by subtracting the voltage of the second battery cluster from the voltage of the first battery cluster is greater than the first voltage threshold, the first switch is open, and the second switch is closed.

3. The energy storage system according to claim 1, wherein the power conversion system is configured to transfer the electric energy of the second battery cluster to the power grid when the power conversion system is electrically connected to the power grid, a difference obtained by subtracting the voltage of the first battery cluster from the voltage of the second battery cluster is greater than the first voltage threshold, the first switch is open, and the second switch is closed.

4. The energy storage system according to any one of claims 1 to 3, wherein the first battery cluster comprises a first voltage sampling unit, and the second battery cluster comprises a second voltage sampling unit;
the first voltage sampling unit is configured to: when the first switch is closed and the second switch is open, collect a voltage of the direct current bus to obtain a first bus voltage;
the second voltage sampling unit is configured to: when the first switch is closed and the second switch is open, collect a voltage of the direct current bus to obtain a second bus voltage; and when the first switch is open and the second switch is closed, collect a voltage of the direct current bus to obtain a third bus voltage; and
the voltage of the first battery cluster is the first bus voltage, and the voltage of the second battery cluster is a sum of the third bus voltage and a difference obtained by subtracting the second bus voltage from the first bus voltage.

5. The energy storage system according to any one of claims 1 to 3, wherein the first battery cluster comprises a third voltage sampling unit, and the second battery cluster comprises a second voltage sampling unit;
the second voltage sampling unit is configured to: when the first switch is closed and the second switch is open, collect a voltage of the direct current bus to obtain a second bus voltage; and when the first switch is open and the second switch is closed, collect a voltage of the direct current bus to obtain a third bus voltage;
the third voltage sampling unit is configured to: when the first switch is closed and the second switch is open, collect a voltage across two ends of the plurality of battery cells in the first battery cluster after these battery cells are connected in series/parallel, to obtain a first voltage; and
the voltage of the first battery cluster is the first voltage, and the voltage of the second battery cluster is a sum of the third bus voltage and a difference obtained by subtracting the second bus voltage from the first voltage.

6. The energy storage system according to any one of claims 1 to 5, wherein the first switch is configured to be closed when the absolute value of the difference between the voltage of the first battery cluster and the voltage of the second battery cluster is less than or equal to the first voltage threshold, and a current of the second battery cluster is less than or equal to a current threshold.

7. The energy storage system according to any one of claims 1 to 5, wherein the power conversion system is further configured to shut down when the absolute value of the difference between the voltage of the first battery cluster and the voltage of the second battery cluster is less than or equal to the first voltage threshold; and
the first switch is configured to: after the power conversion system has been shut down for first duration, be closed when the absolute value of the difference between the voltage of the first battery cluster and the voltage of the second battery cluster is less than or equal to the first voltage threshold, wherein the first duration is greater than 0.

8. The energy storage system according to any one of claims 1 to 7, wherein the power conversion system is further configured to: in a process of controlling electric energy to be transferred between the second battery cluster and the power grid, when the absolute value of the difference between the voltage of the first battery cluster and the voltage of the second battery cluster is greater than or equal to a second voltage threshold, control a current value of the second battery cluster to be a first current value; and when the absolute value of the difference between the voltage of the first battery cluster and the voltage of the second battery cluster is greater than the first voltage threshold and less than the second voltage threshold, control the current value of the second battery cluster to be a second current value, wherein the second current value is less than the first current value.

9. The energy storage system according to any one of claims 1 to 8, wherein the energy storage system further comprises a first controller;
the first controller is configured to: when the power conversion system is electrically connected to the power grid, the absolute value of the difference between the voltage of the first battery cluster and the voltage of the second battery cluster is greater than the first voltage threshold, the first switch is open, and the second switch is closed, control the power conversion system to transfer the electric energy of the second battery cluster to the power grid, or transfer the electric energy of the power grid to the second battery cluster; and
the first controller is further configured to: when the absolute value of the difference between the voltage of the first battery cluster and the voltage of the second battery cluster is less than or equal to the first voltage threshold, control the first switch to be closed.

10. The energy storage system according to any one of claims 1 to 9, wherein the first battery cluster and the second battery cluster each comprise a cluster control box, the first switch is disposed in the cluster control box of the first battery cluster, and the second switch is disposed in the cluster control box of the second battery cluster.

11. The energy storage system according to any one of claims 1 to 10, wherein the plurality of energy storage units comprise a first energy storage unit and a second energy storage unit;
the power conversion system in the first energy storage unit is further configured to: when the power conversion system in each energy storage unit is electrically disconnected from the power grid, the difference obtained by subtracting the voltage of the first battery cluster in the first energy storage unit from the voltage of the second battery cluster in the first energy storage unit is greater than the first voltage threshold, the first switch in the first energy storage unit is open, and the second switch in the first energy storage unit is closed, transfer the electric energy of the second battery cluster in the first energy storage unit to the alternating current end of the power conversion system in the first energy storage unit; and
the power conversion system in the second energy storage unit is further configured to: when the power conversion system in each energy storage unit is electrically disconnected from the power grid, the difference obtained by subtracting the voltage of the first battery cluster in the first energy storage unit from the voltage of the second battery cluster in the first energy storage unit is greater than the first voltage threshold, one switch in the second energy storage unit is open, and the other switch is closed, transfer electric energy at the alternating current end of the power conversion system in the second energy storage unit to a battery cluster that is connected to the other switch and that is in the second energy storage unit.

12. The energy storage system according to any one of claims 1 to 11, wherein the plurality of energy storage units comprise the first energy storage unit and the second energy storage unit;
the power conversion system in the second energy storage unit is further configured to: when the power conversion system in each energy storage unit is electrically disconnected from the power grid, the difference obtained by subtracting the voltage of the second battery cluster in the first energy storage unit from the voltage of the first battery cluster in the first energy storage unit is greater than the first voltage threshold, one switch in the second energy storage unit is open, and the other switch is closed, transfer, to the alternating current end of the power conversion system in the second energy storage unit, electric energy of a battery cluster that is connected to the other switch and that is in the second energy storage unit; and
the power conversion system in the first energy storage unit is further configured to: when the power conversion system in each energy storage unit is electrically disconnected from the power grid, the difference obtained by subtracting the voltage of the second battery cluster in the first energy storage unit from the voltage of the first battery cluster in the first energy storage unit is greater than the first voltage threshold, the first switch in the first energy storage unit is open, and the second switch in the first energy storage unit is closed, transfer electric energy at the alternating current end of the power conversion system in the first energy storage unit to the second battery cluster in the first energy storage unit.

13. The energy storage system according to claim 11 or 12, wherein the energy storage system further comprises a second controller;
the second controller is configured to: when the power conversion system in each energy storage unit is electrically disconnected from the power grid, the difference obtained by subtracting the voltage of the first battery cluster in the first energy storage unit from the voltage of the second battery cluster in the first energy storage unit is greater than the first voltage threshold, the first switch in the first energy storage unit is open, and the second switch in the first energy storage unit is closed, control the power conversion system in the first energy storage unit to transfer the electric energy of the second battery cluster in the first energy storage unit to the alternating current end of the power conversion system in the first energy storage unit;
the second controller is further configured to: when the power conversion system in each energy storage unit is electrically disconnected from the power grid, the difference obtained by subtracting the voltage of the first battery cluster in the first energy storage unit from the voltage of the second battery cluster in the first energy storage unit is greater than the first voltage threshold, one switch in the second energy storage unit is open, and the other switch is closed, control the power conversion system in the second energy storage unit to transfer the electric energy at the alternating current end of the power conversion system to a battery cluster that is connected to the other switch and that is in the second energy storage unit; and
the second controller is further configured to: when the absolute value of the difference between the voltage of the first battery cluster in the first energy storage unit and the voltage of the second battery cluster in the first energy storage unit is less than or equal to the first voltage threshold, control the first switch in the first energy storage unit to be closed.
